# EUROPEAN PATENT SPECIFICATION

(11) **EP 2 205 663 B1**
(45) Date of publication and mention of the grant of the patent: **21.05.2014**
(21) Application number: 07849741.9
(22) Date of filing: 06.11.2007
(51) Int. Cl.: C08J 5/18, B32B 27/34, A01G 9/14

(54) **COVERING FILM FOR USE IN AGRICULTURE WITH HEAT INSULATION EFFECT AND PESTICIDE BARRIER EFFECT, WITH ONE OR MORE POLYAMIDE LAYERS, AND CORRESPONDING PRODUCTION METHOD**
ABDECKFOLIE ZUR VERWENDUNG IN DER LANDWIRTSCHAFT MIT WÄRMEISOLIERUGSWIRKUNG UND PESTIZIDBARRIEREWIRKUNG MIT EINER ODER MEHREREN POLYAMIDSCHICHTEN UND ENTSPRECHENDES HERSTELLUNGSVERFAHREN
FILM DE PROTECTION COMPORTANT UNE OU PLUSIEURS COUCHES DE POLYAMIDE ET S'UTILISANT DANS L'AGRICULTURE POUR FORMER UNE ISOLATION THERMIQUE ET UNE BARRIÈRE CONTRE LES PESTICIDES, ET PROCÉDÉ DE PRODUCTION CORRESPONDANT

(43) Date of publication of application: 14.07.2010
(73) Proprietor: Agriplast S.r.l., 97019 Vittoria (IT)
(72) Inventor: CASCONE, Marco, I-97019 Vittoria (RG) (IT)
(74) Representative: Vinci, Marcello
(86) International application number: PCT/IT2007/000779
(87) International publication number: WO 2009/060480

(56) References cited:
- EP-A- 0 388 942
- EP-A- 0 475 720
- EP-A- 0 960 903
- EP-A- 1 080 878
- EP-A- 1 095 963
- WO-A-99/29154
- FR-A- 2 070 745
- US-A- 4 618 528
- US-A- 4 819 374
- DATABASE WPI Week 198004 Thomson Scientific, London, GB; AN 1980-06216C XP002489403 & JP 54 155272 A (ASAHI DOW LTD) 7 December 1979 (1979-12-07)
- DATABASE WPI Week 200632 Thomson Scientific, London, GB; AN 2006-303072 XP002489404 & RU 2 269 548 C1 (BAZIS SCI TECH FIRM CO LTD) 10 February 2006 (2006-02-10)

## Description

### FIELD OF APPLICATION OF THE INVENTION

The present invention relates to the use of a film in plastic material, consisting of one or more layers, mono-extruded or co-extruded, as a covering film for greenhouses, having one or both the following characteristics, depending on the layer/layers of the film containing polyamide, of the homopolymer or copolymer type:
- high heat insulation effect;
- barrier effect against pesticides and/or other chemical agents.

### STATE OF THE ART

Traditional coverings for greenhouses, both those tunnel-shaped and those with roof, can be divided into rigid or flexible coverings.

Rigid coverings are made of glass, polyester reinforced with glass fibres, corrugated rigid PVC, polymethyl methacrylate or polycarbonate and they have a thickness of several millimetres.

Flexible coverings are made of plasticised PVC, EVA copolymer (ethylene vinyl acetate), low density PE and linear PE, ethylene-tetra-fluoro ethylene, polyurethane, polypropylene and blends or mixtures thereof, and their thickness is usually in the order of tenths of a millimetre.

In any case, the characteristics required for the coverings of greenhouses are the following:
- mechanical resistance, including resistance to stress due to adverse weather agents and weather conditions, in such a way as to suitably protect the crop being grown under them;
- solar energy transmittance, in particular of P.A.R. (photosynthetic active radiations);
- greenhouse effect, i.e. capacity to transmit or filtrate radiation bands in the infrared field (7,000-13,000 nm);
- long life, thanks to their resistance to the radiations that change their molecular structure;
- resistance to deterioration due to the use of chemical agents and pesticides by farmers.

Flexible films are less expensive than rigid sheets, require less complicated support structures and are easier to install.

Therefore, the choice of the covering material is very important, since it is necessary to take into account different needs that sometimes may be conflicting. For example, mechanical resistance increases as thickness increases, but this reduces light transmission.

The IR effect, commonly known as greenhouse effect, is expressed as a percentage value and is graphically represented by the spectral absorbance of the film in the band included between 770 and 1430 cm⁻¹ in the infrared field. This series of wave lengths corresponds to the field of maximum emission of energy irradiated by the earth surface.

At present the covering films for use in agriculture mainly contain PE that, however, offers a relatively low greenhouse effect.

The current state of the art proposes films containing EVA compounds, since this offers a higher intrinsic IR effect compared to PE.

According to the current state of the art, the film compound contains PU or PVC, which offer a high intrinsic heat insulation effect.

PVC, on the other hand, poses considerable drawbacks, for example a very limited temperature range for use, included between -10 and 40°C, as well as the presence of plasticizers that migrate to the surface and tend to weaken the film.

Another alternative currently adopted is constituted by the use of fillers, usually consisting of silicates or silico aluminates, which considerably increase the greenhouse effect but at the same time weaken the film structure and significantly reduce its mechanical resistance with the same thickness and relative total transmittance.

The current reference standard (EN 13206) for covering films to be used in agriculture classified as "clear thermic film" and "diffusing thermic film" requires a greenhouse effect that varies according to the film thickness, included between a minimum value ≥ 55% (for "clear thermic films" with thickness ≥ 70 µm) and > 75% (for both "clear thermic film" and "diffusing thermic film" with thickness ≥ 200 µm).

Following an experimental stage and laboratory tests comparing polyamide and other polymers (analyses carried out with a Jasco FT-IR 460 spectrophotometer), the following data have been collected regarding the heat insulation characteristics, with the same thickness:

| **Polymer** | **Thickness** | **IR effect*** |
|---|---|---|
| LDPE | 60µm | 30% |
| Copolymer EVA% | 60µm | 57% |
| PVC | 60µm | 80% |
| Polyamide 6 homopolymer | 60µm | 86,5% |
| Polyamide copolymer 6/66 | 60µm | 89% |

| | | |
|---|---|---|
| ****Punctual analysis method tolerance* +/- *2%*** | | |

It is therefore possible to observe that, with the same thickness, polyamide has a heat insulation effect that is practically three times than that of low density polyethylene (LDPE) which usually is the main component of traditional covering films for use in agriculture. Polyamide has a heat insulation effect that is also considerably higher than that of ethylene vinyl acetate (copolymer), in this specific case with a content of vinyl acetate equal to 14%.

A detailed study has also been carried out to verify the variation of the heat insulation effect of polyamide according to the thickness of the film.

The results obtained are shown here below:

| **Polyamide Copolymer 6/66** | |
|---|---|
| **Thickness** | **IR effect*** |
| 80 µm | 93% |
| 70µm | 91% |
| 60µm | 89% |
| 50µm | 85% |
| 40µm | 80% |
| 30µm | 70% |
| 20µm | 59% |
| 10µm | 39% |

| | |
|---|---|
| **** Punctual analysis method tolerance* +/- *2%*** | |

It is important to point out that 20 µm of polyamide have the same heat insulation effect as 60 µm of EVA (copolymer) with a content of vinyl acetate equal to 14%, and that 40 µm of polyamide have the same heat insulation effect as 60 µm of PVC. It would also be possible to obtain high heat insulation effects using polyethylene or EVA with the addition of mineral fillers as base polymers, but on the other hand a considerable worsening of the optical characteristics (light transmittance, brightness) would follow. On the contrary, polyamide is intrinsecally provided with very high heat insulation effect and optical characteristics.

It is known that the use of chemical agents and pesticides causes the deterioration of the covering material.

One of the factors that cause the deterioration of polymers is the action of the pesticides that contain sulphur, chlorine, iron and copper, abundantly used by farmers.

These chemical compounds considerably reduce the working life of the films, since they interact with the most commonly used stabilizers (HALS, nickel): iron and sulphur deactivate the HALS (sterically hindered amines), and chlorine deactivates nickel.

By way of example the table below illustrates a series of exposures of films of various types in a ventilated oven, exposed to mixtures of pesticides commonly used in agriculture, in order to verify the residue in ppm under the same conditions via X ray fluorescence analysis.

| | **ppm sulphur** | **ppm chlorine** |
|---|---|---|
| **100 µm LDPE film (shielded against pesticides with 30 µm PA film)** | **40** | **18** |
| **100 µm LDPE film (shielded against pesticides with 30 µm PA film)** | **294** | **47** |

### Test carried out via XRF Thermo Electron ARL Optim'X

### After 7-day exposure to a mixture of metham sodium and cypermethrin in a ventilated oven thermostat T = 50°C

On the other hand, it has been observed that polyamide is characterized by a very low coefficient of permeability to both pure gases and gas mixtures.

Therefore, in the case where a film in co-extruded PA is produced, with the layer on the inside of the greenhouse in PA and the other layers in PE (or PA), one PA layer is sufficient to obtain an effective shielding action against the chemical products that make up the pesticides.

Following the experimental stage that has been synthetically described above, a new use of covering film for greenhouse in agriculture has been studied, said covering film consisting of one or more layers of polyamide and presents one or both the following characteristics:
- high heat insulation effect;
- barrier effect against pesticides and/or other chemical agents.

### OBJECTS OF THE INVENTION

One of the objects of the present invention is to use for greenhouse in agriculture obtain a flexible film with very high heat insulation effect, with no need to significantly alter the total transmittance of the film itself.

Another object of the present invention is to use for greenhouse in agriculture a film characterized by high flexibility, heat insulation effect and transmittance together with high mechanical resistance.

A further object of the invention is to use for greenhouse in agriculture a film that is highly resistant to the chemical agents and pesticides commonly used in agriculture, thanks to the fact that it acts as a barrier against chemical agents due to the molecular structure of polyamide. This particular characteristic of polyamide also makes the film highly durable and resistant compared to the films of known type.

### DESCRIPTION OF THE INVENTION

The covering film used in agriculture involves the use of polyamide, of the homopolymer or copolymer type.

The film can consist of one or more layers.

If the film consists of more than one layer, at least one of said layers comprises polyamide, be it a homopolymer or a copolymer.

The melting temperatures of the polymers used in the same layer can be different, but the difference should preferably be included between 5 and 50K, better if between 10 and 40K.

Since the melting temperature of polyamide is in any case considerably higher than the melting temperature of polyethylene, EVA and other polymers, polyamide should preferably be used as the only polymeric component in one or more layers, without mixing it with other polymers.

The polymers that make up the layer/layers of the film can be homogeneous or heterogeneous and can be characterised by affinity or non-affinity of their polymeric structures from a molecular point of view, as well as by concentrations varying from 1 to 100%.

The various combinations of polymers in the different layers, starting from base polymers and from the following heterogeneous pairs, can be:
- LDPE and PA;
- EVA and PA;
- EMA and PA;
- EBA and PA;
- EEA and PA;
- LLDPE and PA;
- PP and PA;
- PA and PU;
- PVC and PA;
and all the relative possible combinations of the above mentioned polymers.

The film can also be constituted of single layer or multiple layer PA only.

According to the invention it is also possible to add additives, like slipping additives, antistatic agents, anti-drip agents, surfactants, UV stabilizers, mineral fillers, silica, zeolite, ceramics or other materials, boron and its compounds, maleic anhydride, bonding agents to facilitate the adhesion of adjacent layers, nucleant agents, crosslinking agents, nanocomposite additives, hollow and solid microspheres in glass.

Modifications and additions are possible in the manufacture of the film, provided that these remain within the scope of the present invention.

Each layer of the film can be obtained from mono or co-extrusion plants, of the blown or cast film type, without particular modifications, fitted in such a way as to be capable of operating with suitable flexibility according to the process conditions, turning speed of the screw/screws and temperature profiles, so as to adapt to the characteristics of the formula of the selected polymers.

The film uses for greenhouse in agriculture according to the invention is characterized in that it has a very high specific IR effect compared to the thickness of the film itself.

The film has a very high heat insulation effect, great mechanical resistance, very high total transmittance.

Furthermore, the film, be it in one or more layers, of which one or more are in polyamide, is highly resistant to pesticides.

### DESCRIPTION OF THE SYSTEM

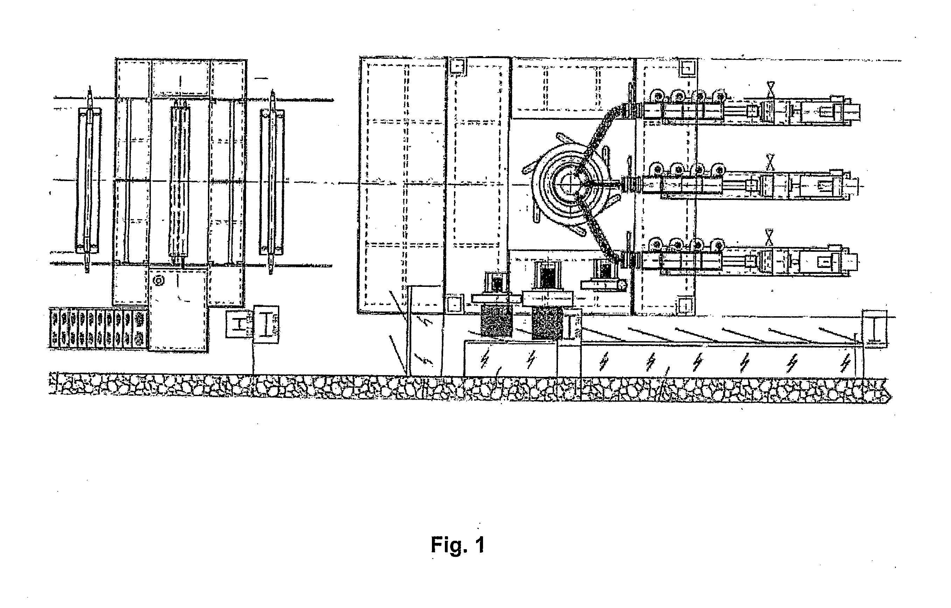

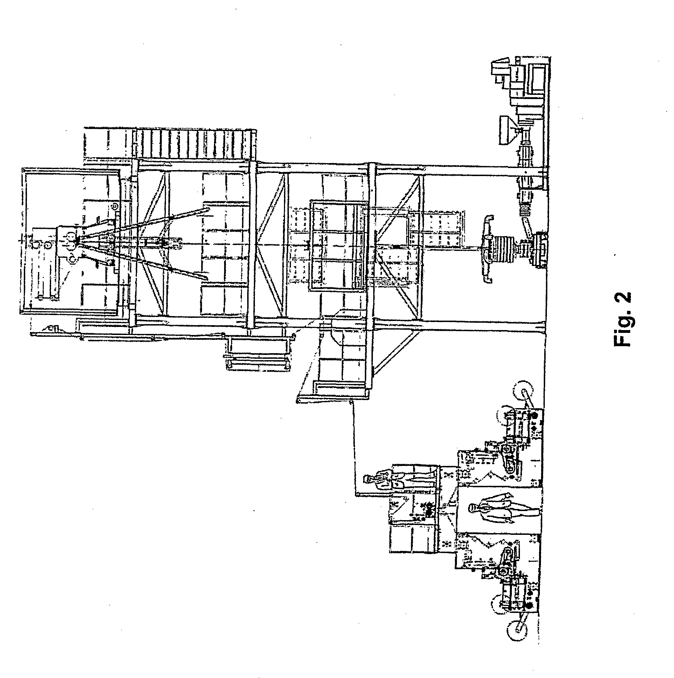

The film used for greenhouse in agriculture is produced in an apposite preferential production system capable of manufacturing it, according to the diagrams shown in Figures 1 and 2 that are to be considered as non-limiting examples and show a schematic view of the system. The system that produces a film as described above is preferably constituted by conventional extrusion equipment.

The system for proportioning the various components to be mixed can be of the gravimetric or volumetric type, in any case suited to proportion the necessary components in the quantities required for the individual compounds in the single screws, including the relevant additives and colouring masters.

The granules of the base polymers and of the *compounds* making up the additives can be partially pre-mixed in a hopper suited to feed the extruder's feeding section. If the production process includes co-extrusion, the feeding of granules and *compounds* will be proportional for each line.

Using various types of polymers for monoextrusion, the extrusion temperature must be almost equal to the melting point of the polymer with highest melting point. Temperature is gradually changed by means of automated controls, sector by sector, through thermocouple sensors connected to heat regulators through a control unit, for example a PLC, and respectively with electric resistors that heat the different sectors of the extruder.

Suitable centrifugal fans are properly arranged to cool the extruder.

The selection of the temperature of each sector of the extruder is defined according to the friction ratio generated between the cylinder and the inner screw and the rheological curves of the used polymers.

In this way the melted polymeric material reaches the correct fluidity and can flow through the head of the extruder and come out in a tubular shape.

The diameter and thickness of said tubular element are regulated by injecting air inside the tube and also depend on the speed of the extruder.

The tubular element is cooled at the base by tangential air and proceeds through the cooling tower. During its advance movement, the tubular element reaches the drive rollers positioned at the top of the system, said rollers completing the flattening of the tubular element that is conveyed downward towards the winder.

The coupling of various layers, if the film is produced through coextrusion, can be obtained also by using the known bonding agents that favour adhesion between the various layers of the film.

Therefore, with reference to the above description and the attached drawings, the following claims are expressed.

## Claims

1. Use of covering film for greenhouses in agriculture, said covering film consisting of two or more homogeneous polymers or two or more heterogeneous polymers, that can be bonded due to their rheological features, **characterized in that** it comprises two or more layers and wherein at least the inner layer or the layer near the inner layer comprises polyamide with low permeability to the gases and/or gas mixtures of chemical agents and/or pesticides.

2. Use of a covering film according to claim 1, **characterized in that** said covering film consists of several layers, and wherein at least one of said layers is a monopolyrner constituted by polyamide.

3. Use of a covering film according to claim 1 o 2, **characterized in that** said covering film comprises polyamide as a homopolymer or a copolymer.

4. Use of a covering film according to claim 1 o 2 **characterized in that** one or more layers of said covering film comprise two or more mixed polymers or copolymers, heated and extruded together, one of which is polyamide.

5. Use of a covering film according to claim 1, **characterized in that** said covering film, for its characteristics, can be classified as "normal", "clear thermic film" or "diffusing thermic film" according to the EN13206 reference standard.

6. Use of a covering film, in one or more layers, according to one or more of the preceding claims, **characterized in that** said covering film is made with variable thickness ranging from 1 to 1000 µm per each layer.

7. Use of a covering film according to one or more of the preceding claims, **characterized in that** said covering film has a mechanical resistance higher than that of an analogous film not containing polyamide in the compound.

8. Use of a covering film according to one or more of the preceding claims, **characterized in that** said covering film is obtained through mono or co-extrusion, of the blown or cast film type.

9. Use of a covering film according to one or more of the preceding claims, **characterized in that** said covering film contains in at least one of its layers, that is, in the layer/s containing polyamide and/or in any other layer/s of polymer/polymers not containing polyamide, slipping additives and/or antistatic agents and/or anti-drip agents and/or surfactants and/or UV stabilizers and/or mineral fillers and/or boron and its compounds and/or bonding agents for adjacent layers and/or nucleant agents and/or crosslinking agents and/or maleic anhydride and/or nanocomposite additives and/or hollow and solid microspheres in glass, silica, zeolite and/or ceramic and/or other materials.

10. Use of a covering films for use in agriculture consisting of two or more homogeneous polymers or two or more heterogeneous polymers, according to one or more of the preceding claims, **characterized in that** said covering film is made by:
• mono-extrusion or co-extrusion of the polymeric material, including polyamide, at a suitable temperature;
• making of one or more films in a polymeric material produced with lamination tecniques,
and wherein the co-extruded films are coupled by means of adhesives.

## Patentansprüche

1. Gebrauch von Abdeckfolie für Treibhäuser in der Landwirtschaft, wobei besagte Abdeckfolie aus zwei oder mehr homogenen Polymeren besteht oder aus zwei oder mehr heterogenen Polymeren, die aufgrund ihrer rheologischen Eigenschaften verbunden werden können, **dadurch gekennzeichnet, dass** sie zwei oder mehr Schichten umfasst und wobei wenigstens die innere Schicht oder die der inneren Schicht nächstgelegene Schicht Polyamid mit geringer Durchlässigkeit gegenüber den Gasen und/oder Gasgemischen chemischer Wirkstoffe und/oder Pestizide umfasst.

2. Gebrauch einer Abdeckfolie gemäß Patentanspruch 1, **dadurch gekennzeichnet, dass** die besagte Abdeckfolie aus mehreren Schichten besteht, und wobei wenigstens eine der besagten Schichten ein aus Polyamid bestehender Monopolymer ist.

3. Gebrauch einer Abdeckfolie gemäß Patentanspruch 1 oder 2, **dadurch gekennzeichnet, dass** die besagte Abdeckfolie Polyamid als Homopolymer oder als Copolymer umfasst.

4. Gebrauch einer Abdeckfolie gemäß Patentanspruch 1 oder 2, **dadurch gekennzeichnet, dass** eine oder mehr Schichten der besagten Abdeckfolie zwei oder mehr gemischte, zusammen erhitzte und stranggepresste Polymere oder Copolymere umfassen, von denen einer Polyamid ist.

5. Gebrauch einer Abdeckfolie gemäß Patentanspruch 1, **dadurch gekennzeichnet, dass** die besagte Abdeckfolie aufgrund ihrer Eigenschaften nach Bezugsnorm EN13206 als "normal", "thermisch klare Folie" oder "thermisch diffuse Folie" klassifiziert werden kann.

6. Gebrauch einer Abdeckfolie mit einer oder mehr Schichten gemäß eines oder mehrerer der vorstehenden Patentansprüche, **dadurch gekennzeichnet, dass** die besagte Abdeckfolie in variabler Stärke von 1 bis 1000 µm je Schicht produziert wird.

7. Gebrauch einer Abdeckfolie gemäß eines oder mehrerer der vorstehenden Patentansprüche, **dadurch gekennzeichnet, dass** die besagte Abdeckfolie eine höhere mechanische Festigkeit besitzt als entsprechende Folien, deren Mischung kein Polyamid enthält.

8. Gebrauch einer Abdeckfolie gemäß eines oder mehrerer der vorstehenden Patentansprüche, **dadurch gekennzeichnet, dass** die besagte Abdeckfolie als Blas- oder Gießfolie durch Mono- oder Coextrusion erzielt wird.

9. Gebrauch einer Abdeckfolie gemäß eines oder mehrerer der vorstehenden Patentansprüche, **dadurch gekennzeichnet, dass** die besagte Abdeckfolie in wenigstens einer ihrer Schichten, das heißt in der/den Schicht(en), die Polyamid enthält/enthalten und/oder in jeglicher/jeglichen anderen Schicht(en) aus Polymer(en), die kein Polyamid enthält/enthalten, gleitende Zusätze und/oder antistatische und/oder Tropfschutz-Wirkstoffe und/oder Tenside und/oder UV-Stabilisatoren und/oder mineralische Füllstoffe und/oder Bor und dessen Verbindungen und/oder Haftmittel für die angrenzenden Schichten und/oder keimbildende oder vernetzende Wirkstoffe und/oder Maleoinsäureanhydrid und/oder Nanokomposit-Zuschläge und/oder hohle und volle Mikrosphären aus Glas, Kieselerde, Zeolith und/oder Keramik und/oder anderen Materialen enthält.

10. Gebrauch einer Abdeckfolie für den Einsatz in der Landwirtschaft, bestehend aus zwei oder mehr homogenen Polymeren oder aus zwei oder mehr heterogenen Polymeren gemäß eines oder mehrerer der vorstehenden Patentansprüche, **dadurch gekennzeichnet, dass** die besagte Abdeckfolie hergestellt wird durch:
• Monoextrusion oder Coextrusion des polymerischen Materials einschließlich Polyamid bei einer geeigneten Temperatur;
• Herstellung einer oder mehrerer Folien aus polymerischem Material durch Walztechniken,
und wobei die co-extrudierten Folien durch Klebstoffe kaschiert werden.

## Revendications

1. Utilisation d'une pellicule de couverturedans des serres pour l'agriculture, ladite pelliculede couverture se composant de deux ou plusieurs polymères homogènes ou de deux ou plusieurs polymères hétérogènes, qui peuvent être liés grâce à leurs propriétés rhéologiques, **caractérisée en ce qu'**elle comprend deux ou plusieurs couches et où au moins la couche intérieure ou la couche près de la couche intérieure comprend du polyamide à basse perméabilité aux gaz et/ou aux mélanges de gaz d'agents chimiques et/ou de pesticides.

2. Utilisation d'un pellicule selon la revendication 1, **caractérisée en ce que** ladite pellicule de couverture consiste en plusieurs couches, et où au moins une desdites couches est un mono-polymère constitué par un polyamide.

3. Utilisation d'une pellicule de couverture selon la revendication 1 ou 2, **caractérisée en ce que** ladite pellicule de couverture comprend du polyamide comme un homopolymère ou un copolymère.

4. Utilisation d'une pellicule de couverture selon la revendication 1 ou2, **caractérisée en ce qu'**une ou plusieurs couches de ladite pellicule de couverture comprennent deux ou plusieurs polymères ou copolymères mélangés, chauffés et extrudés ensemble, dont un est le polyamide.

5. Utilisation d'une pellicule de couverture selon la revendication 1, caractérisée en ce queladite pellicule de couverture, pour ses caractéristiques, peut être classifiée comme « normale », « claire thermique » ou « pellicule à diffusivitéthermique », selon la norme de référence EN13206.

6. Utilisation d'une pellicule de couverture, en une ou plusieurs couches, selon l'une ou plusieurs des revendications précédentes, **caractérisée en ce que** ladite pellicule de couverture est réalisée avec une épaisseur variable de 1 à 1000 µm pour chaque couche.

7. Utilisation d'une pellicule de couverture selon l'une ou plusieurs des revendications précédentes, **caractérisée en ce que** ladite pellicule de couverture présente une résistance mécanique supérieure à celle d'une pellicule analogue ne contenant pas du polyamide dans le composé.

8. Utilisation d'une pellicule de couverture selon l'une ou plusieurs de revendications précédentes, **caractérisée en ce que** ladite pellicule de couverture est obtenue par mono-extrusion ou coextrusion, du type en bulle ou à plat.

9. Utilisation d'une pellicule de couverture selon l'une ou plusieurs des revendications précédentes, **caractérisée en ce que** ladite pellicule de couverture contient dans au moins une de ses couches, c'est-à-dire, dans la/les couche/s contenant du polyamide et/ou dans les autres couches éventuelles de polymère/polymères ne comprenant pas du polyamide, additifs de glissement et/ou agents antistatiques et/ouagents anti-gouttes et/ousurfactants et/ou stabilisateurs UV et/oucharges minérales et/ou bore etses composés et/ouagents de liaison pour couches adjacentes et/ou agents de nucléation et/ouagents de réticulation et/ou anhydride maléique et/ouadditifs nanocompositeset/ou microsphères creuses et non creuses de verre, de silice, de zéolite et/oucéramiques et/ouautres matériaux.

10. Utilisation d'une pellicule de couverture pour l'agriculture constituée de deux ou plusieurs polymères homogènes ou deux ou plusieurs polymères hétérogènes, selon l'une ou plusieurs des revendications précédentes, **caractérisée en ce que** ladite pellicule de couverture est réalisée par :
• Mono-extrusion ou coextrusionà une température indiquée du matériau polymérique, comprenant du polyamide;
• Production d'une ou plusieurs couches en matériau polymérique produite/s avec des techniques de laminage,
et où les pellicules coextrudées sont accouplées au moyen d'adhésifs.
